# EUROPÄISCHE PATENTSCHRIFT

(11) **EP 0 417 798 B1**
(45) Veröffentlichungstag und Bekanntmachung des Hinweises auf die Patenterteilung: **07.12.1994**
(21) Anmeldenummer: 90117682.6
(22) Anmeldetag: 13.09.1990
(51) Int. Cl.: C01F 7/14, D21H 19/38, C08K 3/22, C09C 1/40, D21H 17/67

(54) **Verfahren zur Herstellung eines kurzprismatischen Aluminiumhydroxids und seine Anwendung als Füllstoff und Pigment**
Process for the preparation of short prismatic aluminium hydroxide and its use as filler or pigment
Procédé pour la préparation d'hydroxide d'aluminium en forme prismatique très court et son application comme matériau de remplissage et pigment

(30) Priorität: 14.09.1989 CH 3356/89
(43) Veröffentlichungstag der Anmeldung: 20.03.1991
(73) Patentinhaber: LONZA AG, CH-3945 Gampel/Wallis (CH)
(72) Erfinder: Bongartz, Hans, Elsdorf (DE); Kirschbaum, Georg, Dr. Dipl.-Chem., Hürtgenwald (DE); Kramer, Klaus Dr. Dipl.-Chem., Kerpen-Horrem (DE)
(74) Vertreter: Weinhold, Peter, Dr.

(56) Entgegenhaltungen:
- EP-A- 0 011 667
- EP-A- 0 271 104
- DE-B- 1 193 926

## Beschreibung

Die Erfindung betrifft ein Verfahren zur Herstellung eines kurzprismatischen Aluminiumhydroxids sowie die Verwendung des Aluminiumhydroxids als Streichpigment in Papier- und Kartonstrich, als flammhemmender Füllstoff in Kunststoffen und als Weisspigment in Farben und Lacken.

Aus der DE-PS 33 38 186 ist ein Verfahren zur Herstellung von Aluminiumhydroxid mit einem mittleren Korndurchmesser unter 4 µm und einer spezifischen Oberfläche zwischen 10 und 25 m²/g bekannt. Bei diesem Verfahren wird die eigentliche Kristallisation bei konstanter Temperatur über die gesamte Ausrührzeit durchgeführt, wobei Kristalle erhalten werden, die eine ausgeprägte Plättchenform aufweisen. Diese Plättchenstruktur ist in verschiedenen Anwendungen und auch in der Herstellung von Nachteil. So wird beispielsweise durch den stark plättchenförmigen Charakter die Filtration und Waschung der ausgerührten Aluminiumhydroxidsuspension erschwert.
Suspensionen, Dispersionen oder Kunststoffmischungen, die als Füllstoffe stark plättchenförmiges Aluminiumhydroxid enthalten, weisen sehr hohe Viskositäten auf und sind schlechter filtrierbar.
Weitere Nachteile sind die schlechte Abdeckkraft und das schlechte Strichvolumen in der Streichfarbe sowie geringerer Glanz.

Die Aufgabe der Erfindung bestand darin, ein verbessertes Aluminiumhydroxid zu entwickeln, welches die aufgeführten Nachteile nicht aufweist.
Diese Aufgabe wurde gelöst mit dem erfindungsgemässen Verfahren zur Herstellung eines kurzprismatischen Aluminiumhydroxids gemäss den Patentansprüchen 1 bis 5.

Das Verfahren zur Herstellung von kurzprismatischem Aluminiumhydroxid erfolgt erfindungsgemäss durch Abkühlen einer Natriumaluminatlauge, z.B. erhalten aus dem Bauxitaufschluss nach dem Bayer-Verfahren, in einem Zeitraum von 8 bis 25 Stunden, von einer höheren Temperatur auf eine tiefere Temperatur, wobei die tiefere Temperatur, in einer Zeit von 20 bis 80 Stunden gehalten wird.
Die Aluminatlauge wird von einer höheren Temperatur zwischen 50 und 80°C, vorzugsweise zwischen 55 und 70°C, auf eine tiefere Temperatur von 30 bis 60°C, vorzugsweise auf 30 bis 50°C, insbesondere auf 40°C, abgekühlt. Die Abkühlzeit der Aluminatlauge von der höheren Temperatur zur tieferen Temperatur beträgt 8 bis 25 Stunden, vorzugsweise 8 bis 12 Stunden.
Die tiefere Temperatur wird über einen Zeitraum von 20 bis 80 Stunden, vorzugsweise von 30 bis 60 Stunden gehalten.

Die Konzentration der Natriumaluminatlösung an kaustischem Na₂O beträgt zweckmässig zwischen 70 und 230 g/l, vorzugsweise zwischen 130 und 150 g/l.
Das Molverhältnis von kaustischem Na₂O an gelöstem Al₂O₃ liegt zweckmässig zwischen 1,25 und 1,75.

Als Impfstoff wird zerkleinertes Aluminiumhydroxid mit einem mittleren Korndurchmesser zwischen 1,0 und 2,0 µm, vorzugsweise zwischen 1,4 und 1,6 µm, und einer spezifischen Oberfläche zwischen 10 und 30 m²/g, vorzugsweise zwischen 15 und 20 m²/g, angewendet.
Die Menge Impfstoff beträgt zweckmässig 2 bis 8 g/l Natriumaluminatlauge.
Die Zersetzung der Natriumaluminatlösung wird bis zum Erhalten eines Molverhältnisses von Na₂O zu gelöstem Al₂O₃ zweckmässig eines Molverhältnisses von Na₂O zu gelöstem Al₂O₃ zweckmässig zwischen 2 und 4, vorzugsweise zwischen 2,3 und 3,3, durchgeführt.

Das nach dem Verfahren gemäss den Patentansprüchen 1 bis 5 hergestellte Aluminiumhydroxid weist einen kleinen mittleren Korndurchmesser, eine geringe spezifische Oberfläche und eine kurzprismatische Struktur auf. Die spezifische Oberfläche liegt, gemessen nach BET, in einem Bereich zwischen 3 und 9 m²/g, bevorzugt wird eine spezifische Oberfläche zwischen 4 und 6 m²/g erhalten. Der mittlere Korndurchmesser beträgt 0,5 bis 1,1 µm, gemessen als d₅₀-Wert nach der laser-scattering-Methode.
Das kurzprismatische Aluminiumhydroxid findet zweckmässig Verwendung als Pigment und Füllstoff in der Papierindustrie, als flammhemmender Füllstoff in Kunststoffen und als Weisspigment in Farben und Lacken.

### Beispiele

10 l Natriumaluminatlauge mit einer Konzentration an Al₂O₃ von 154,5 g/l und einer Konzentration an Na₂O von 138,2 g/l (Molverhältnis an kaustischem Na₂O zu gelöstem Al₂O₃ 1,47), erhalten aus dem Bauxitaufschluss nach dem Bayer-Verfahren, wurden bei einer Temperatur von x°C (s. Tabelle 1) mit einer Impfsuspension versetzt. Die Menge Impfstoff betrug 5 g/l bezogen auf die Natriumaluminatlauge mit den oben angegebenen Konzentrationen. Als Impfstoff wurde ein Standard verwendet mit einem mittleren Korndurchmesser von ca. 1,5 µm und einer spezifische Oberfläche von 15 bis 20 m²/g (gemessen nach BET). Die Suspension wurde mit einem Blattrührer gerührt und in den ersten 10 Stunden auf 40°C abgekühlt. Es wurde weitere 30 bis 50 Stunden auskristallisiert und danach über einen Büchnertrichter filtriert und mit entionisiertem Wasser gewaschen. Der Filterkuchen wurde bei 120°C getrocknet und anschliessend in einer Retschmühle desagglomeriert.

**Tabelle 1**

| Beispiele | Temp. x°C | d₅₀ (µm) | BET (m²/g) | Bemerkung |
|---|---|---|---|---|
| 1 | 40 | 0,96 | 9,3 | Vergleich nach Stand d.Techn. |
| 2 | 57 | 1,10 | 6,5 | erfindungsgem. |
| 3 | 66 | 0,96 | 5,9 | erfindungsgem. |
| 4 | 69 | 0,99 | 5,9 | erfindungsgem. |
| 5 | 69 | 1,00 | 5,3 | erfindungsgem. |
| 6 | 72 | 0,99 | 3,8 | erfindungsgem. |

Die Abdeckkraft des Aluminiumhydroxids wurde in folgenden Rezepturen in Abmischungen mit CaCO₃ (Hydrocarb 90) und Abmischungen mit CaCO₃ (Hydrocarb 90) und feinteiligem Clay (Amazon 88) überprüft.

### Beispiel 7

| | |
|---|---|
| Bindemittel: Dow-Latex 685 | 13,8 Teile (T) |
| Cobinder: Finnfix CMC FF5 | 1,2 T |
| Dispergierhilfsmittel: Na-Polyacrylat (Polysalz CAL) | 0,3 T |
| Streichpigmente: | 100,0 T |
| Feststoffgehalt der Streichfarbe: | 67% |

**Tabelle 2**

| Pigmentmischungen (Anteile [%]) | | | | | |
|---|---|---|---|---|---|
| Streichfarbe | CaCO₃ | Clay | Aluminiumhydroxid plättchenförmig Vergleich Beispiel 1 | Aluminiumhydroxid kurzprismatisch Beispiel 2 | Bemerkung |
| 1 | 70 | - | 30 | | Vergl. nach Stand d. Technik |
| 2 | 70 | - | - | 30 | erfindungsgem. |
| 3 | 70 | 15 | 15 | - | Vergl. nach Stand d. Technik |
| 4 | 70 | - | - | 15 | erfindungsgem. |
| 5 | 70 | 15 | 7.5 | 7.5 | erfindungsgem. |

Die Streichfarben wurden auf grau vorgestrichenem Papier Weissegrad 63 ± 0,5%) mit einem DOW - Laborcoater nach dem Bent-Blade-Prinzip (H. Stränger, Wochenblatt für Papierfabrikation 106, 287-290 (1978), Nr. 11/12) gestrichen. Das Streichgewicht betrug 10 g/m². Der Weissegrad der Streichfarbe wurde mit Elrepho Nr. 65787/DIN 53145 (Tappi T 452/T 525), bei einer Wellenlänge von 457 nm, bestimmt.
Die Ergebnisse sind in Tabelle 3 zusammengefasst.

**Tabelle 3**

| Abdeckkraft der Pigmentmischungen | | | | | |
|---|---|---|---|---|---|
| | Streichfarbe | | | | |
| | 1 | 2 | 3 | 4 | 5 |
| Weisse | 64,8 | 67,4 | 64,8 | 69,1 | 66,8 |
| Glanz | 16,3 | 15,9 | 17,3 | 14,0 | 21,4 |

### Beispiel 8

Die Abdeckkraft des Aluminiumhydroxids wurde ebenso in folgenden Rezepturen in Abmischungen mit Kaolin (Kaobrite, Fa. Boliden (S)), mit CaCO₃ (Hydrocarb 90) überprüft.

| | |
|---|---|
| Bindemittel: Dow-Latex 685 | 13,8 T |
| Cobinder: Finnfix CMC FF5 | 1,2 T |
| Dispergierhilfsmittel: Na-Polyacrylat (Polysalz CAL) | 0,3 T |
| Streichpigmente: | 100,0 T |
| Feststoffgehalt der Streichfarbe: | 67% |

Die Streichfarben wurden mit einer Rackelmaschine (Fa. Gockel, Modell 202/Serien Nr. 16040) auf sogenannte opacity charts (Fa. The Leneta Company, P.O. Box 86, Ho-Ho-Kus, N.Y. 07423) gestrichen. Das Streichgewicht betrug 12 g/m². Der Feststoffgehalt der Streichfarben für die Rackelmaschine betrug ca 50%.

Bei den opacity charts handelt es sich um weissen Karton mit einem schwarzen Streifen in der Mitte. Dieser Karton wird benutzt, um Aussagen über die Abdeckung (Opazität) machen zu können. Die in Tabelle 6 angegebenen Opazitäten wurden nach DIN 53146 mit dem in Beispiel 7 angegebenen Elrepho-Gerät gemessen.
Der Weissegrad wurde entsprechend Beispiel 7 bestimmt.

**Tabelle 4**

| Pigmentmischungen (Anteile [%]) | | | | |
|---|---|---|---|---|
| Streichfarbe | Kaolin | Aluminiumhydroxid plättchenförmig d₅₀=1,1 µm (Vergl. nach Stand d. Techn.) | Aluminiumhydroxid kurzprismatisch Beispiel 6 | Bemerkung |
| 6 | 80 | 20 | - | Vergl. nach Stand d. Technik |
| 7 | 80 | - | 20 | erfindungsgem. |
| 8 | 60 | 40 | - | Vergl. nach Stand d. Technik |
| 9 | 60 | - | 40 | erfindungsgem. |

**Tabelle 5**

| Abdeckkraft der Pigmentmischungen | | | | |
|---|---|---|---|---|
| | Streichfarbe | | | |
| | 6 | 7 | 8 | 9 |
| Weisse | 66,9 | 67,9 | 68,2 | 68,9 |
| Opazität | 50,3 | 54,4 | 53,5 | 54,6 |

**Tabelle 6**

| Pigmentmischungen (Anteile [%]) | | | | | |
|---|---|---|---|---|---|
| Streichfarbe | Kaolin | CaCO₃ | Aluminiumhydroxid plättchenförmig d₅₀=1,5 µm (Vergl. nach Stand d. Techn.) | Aluminiumhydroxid kurzprismatisch Beispiel 6 | Bemerkung |
| 10 | - | - | 100 | - | Vergl. nach Stand d.Technik |
| 11 | - | - | - | 100 | erfindungsgem. |
| 12 | 60 | 20 | 20 | - | Vergl. nach Stand d.Technik |
| 13 | 60 | 20 | - | 20 | erfindungsgem. |

**Tabelle 7**

| Abdeckkraft der Pigmentmischungen | | | | |
|---|---|---|---|---|
| | Streichfarbe | | | |
| | 10 | 11 | 12 | 13 |
| Weisse | 69,4 | 74,3 | 67,3 | 68,9 |
| Opazität | 40,1 | 58,4 | 38,3 | 41,9 |

## Patentansprüche

1. Verfahren zur Herstellung eines kurzprismatischen Aluminiumhydroxids mit einem mittleren Korndurchmesser unter 10 µm durch Zersetzung einer übersättigten Natriumaluminatlauge in der Wärme in Gegenwart eines aus Aluminiumhydroxid bestehenden Impfmaterials und anschliessendes Abtrennen des ausgefällten Aluminiumhydroxids, dadurch gekennzeichnet, dass die Aluminatlauge von einer höheren Temperatur zwischen 50 und 80° C innerhalb von 8 bis 25 Stunden auf eine tiefere Temperatur von 30 bis 60° C abgekühlt wird und die tiefere Temperatur über einen Zeitraum von 20 bis 80 Stunden gehalten wird, und daß das aus Aluminiumhydroxid bestehende Impfmaterial einen mittleren Korndurchmesser zwischen 1,0 und 2,0 µm aufweist und die spezifische Oberfläche, gemessen nach BET, zwischen 10 und 30 m²/g liegt.

2. Verfahren nach Patentanspruch 1, dadurch gekennzeichnet, dass die Aluminatlauge von einer höheren Temperatur zwischen 55 und 70°C, in einer Zeit von 8 bis 12 Stunden, auf eine tiefere Temperatur zwischen 30 und 50°C abgekühlt wird und diese Temperatur 30 bis 60 Stunden lang gehalten wird.

3. Verfahren nach mindestens einem der Patentansprüche 1 und 2, dadurch gekennzeichnet, dass die Natriumaluminatlösung eine Konzentration an kaustischem Na₂O zwischen 70 und 230 g/l aufweist, und dass das Molverhältnis von kaustischem Na₂O zu gelösten Al₂O₃ zwischen 1,25 und 1,75 liegt.

4. Verfahren nach mindestens einem der Ansprüche 1 bis 3, dadurch gekennzeichnet, dass das Impfmaterial einen mittleren Korndurchmesser zwischen 1,4 und 1,6 µm aufweist, und die spezifische Oberfläche, gemessen nach BET, zwischen 15 und 20 m²/g liegt.

5. Verfahren nach: Patentanspruch 4,
dadurch gekennzeichnet, dass die Menge an Impfmaterial 2 bis 8 g/l Natriumaluminatlauge beträgt.

6. Kurzprismatisches Aluminiumhydroxid, hergestellt nach dem Verfahren gemäss mindestens einem der Patentansprüche 1 bis 5, dadurch gekennzeichnet, dass es eine spezifische Oberfläche zwischen 3 m²/g und 9 m²/g, z.B. zwischen 4 und 6 m²/g, gemessen nach BET, und einen mittleren Korndurchmesser von 0,5 bis 1,1 µm, gemessen als d₅₀-Wert nach der laser-scattering-Methode, aufweist.

7. Verwendung des Aluminiumhydroxids nach dem Patentanspruch 6 als Pigment und Füllstoff in der Papierindustrie.

8. Verwendung des Aluminiumhydroxids nach dem Patentanspruch 6 als flammhemmender Füllstoff in Kunststoffen.

9. Verwendung des Aluminiumhydroxids nach dem Patentanspruch 6 als Weisspigment in Farben und Lacken.

## Claims

1. A process for the preparation of short prismatic aluminum hydroxide having a mean grain diameter below 10 µm by decomposing an oversaturated caustic solution of sodium aluminate under heat in the presence of a seed material consisting of aluminum hydroxide and subsequently separating the precipitated aluminum hydroxide, characterized in that the caustic aluminate solution is cooled within 8 to 25 hours from a higher temperature between 50 and 80°C down to a lower temperature of from 30 to 60°C whereupon said lower temperature is maintained over a period of 20 to 80 hours, and that the seed material consisting of aluminum hydroxide has a mean grain diameter between 1.0 and 2.0 µm as well as a specific surface area, measured according to BET, between 10 and 30 m²/g.

2. The process according to Claim 1 , characterized in that the caustic aluminate solution having a temperature between 55 and 70°C is cooled down within a period of 8 to 12 hours to a lower temperature between 30 and 50°C, and that this temperature is maintained for 30 to 60 hours.

3. The process according to at least one of Claims 1 and 2, characterized in that the caustic solution of sodium aluminate has a concentration in caustic Na₂O between 70 and 230 g/l, and that its molar ratio of caustic Na₂O to dissolved Al₂O₃ is between 1.25 and 1.75.

4. The process according to at least one of Claims 1 to 3, characterized in that the seed material has a mean grain diameter between 1.4 and 1.6 µm, and that the specific surface area, measured according to BET, is between 15 and 20 m²/g.

5. The process according to Claim 4, characterized in that the amount of seed material is from 2 to 8 g per liter of the caustic solution of sodium aluminate.

6. Short prismatic aluminum hydroxide prepared according to the process set forth in at least one of Claims 1 to 5, characterized by having a specific surface area between 3 and 9 m²/g, e.g. between 4 and 6 m²/g, measured according to BET, as well as a mean grain diameter of from 0.5 to 1.1 µm, measured as d₅₀-value according to the laser-scattering method.

7. Use of the aluminum hydroxide according to Claim 6 as pigment and filler in the paper industry.

8. Use of the aluminum hydroxide according to Claim 6 as flame-retarding filler in synthetic materials.

9. Use of the aluminum hydroxide according to Claim 6 as white pigment in colors and lacquers or varnishes.

## Revendications

1. Procédé pour la préparation d'un hydroxyde d'aluminium de forme prismatique courte et d'un diamètre granulométrique moyen inférieur à 10 µ par décomposition d'une lessive d'aluminate de sodium sursaturée sous l'effet de la chaleur en présence d'une matière d'inoculation constituée par un hydroxyde d'aluminium et séparation subséquente de l'hydroxyde d'aluminium précipité, caractérisé en ce que la lessive d'aluminate d'une température élevée entre 50 et 80°C est refroidie en un laps de temps de 8 à 25 heures à une température plus basse de 30 à 60°C, et la température plus basse est maintenue pendant une période de 20 à 80 heures, et en ce que la matière d'inoculation constituée par de l'hydroxyde d'aluminium présente un diamètre granulométrique moyen entre 1,0 et 2,0µ et la surface spécifique, mesurée selon BET, se situe entre 10 et 30 m²/g.

2. Procédé selon la revendication 1, caractérisé en ce que la lessive d'aluminate est refroidie à partir d'une température supérieure entre 55 et 70°C, en un laps de temps de 8 à 12 heures, à une température plus basse entre 30 et 50° et cette température est maintenue pendant 30 à 60 heures.

3. procédé selon au moins l'une des revendications 1 et 2, caractérisé en ce que la solution d'aluminate de sodium présente une concentration en NA₂O caustique entre 70 et 230 g/l et en ce que le rapport molaire entre le NA₂O caustique et l'AL₂O₃ dissous se situe entre 1,25 et 1,75.

4. Procédé selon au moins l'une des revendications 1 à 3, caractérisé en ce que la matière d'inoculation présente un diamètre granulométrique moyen entre 1,4 et 1,6µ et la surface spécifique, mesurée selon BET, se situe entre 15 et 20 m²/g.

5. Procédé selon la revendication 4, caractérisé en ce que la quantité de matière d'inoculation est de 2 à 8 g/l de lessive d'aluminate de sodium.

6. Hydroxyde d'aluminium de forme prismatique courte, préparé selon le procédé d'au moins l'une des revendication 1 à 5, caractérisé en ce qu'il présente une surface spécifique entre 3 m²/g et 9 m²/g, par exemple entre 4 et 6 m²/g, mesuré selon BET, et un diamètre granulométrique moyen de 0,5 à 1,1µ, mesuré comme valeur d₅₀- selon le procédé de diffusion laser.

7. Utilisation de l'hydroxyde d'aluminium selon la revendication 6 comme pigment et matière de charge dans l'industrie du papier.

8. Utilisation de l'hydroxyde d'aluminium selon la revendication 6 comme matière de charge retardatrice de combustion dans les matières synthétiques.

9. Utilisation d'hydroxyde d'aluminium selon la revendication 6 comme pigment blanc dans les colorants et peintures.
